# EUROPÄISCHE PATENTSCHRIFT

(11) **EP 3 574 368 B1**
(45) Veröffentlichungstag und Bekanntmachung des Hinweises auf die Patenterteilung: **14.05.2025**
(21) Anmeldenummer: 18701280.2
(22) Anmeldetag: 12.01.2018
(51) Int. Cl.: G02C 7/06, G02C 7/08, G02B 27/01

(54) **BRILLENGLAS FÜR EINE AUF DEN KOPF EINES BENUTZERS AUFSETZBARE UND EIN BILD ERZEUGENDE ANZEIGEVORRICHTUNG**
SPECTACLE LENS FOR A DISPLAY DEVICE WHICH CAN BE PLACED ON THE HEAD OF A USER AND GENERATES AN IMAGE
VERRE DE LUNETTES POUR UN DISPOSITIF D'AFFICHAGE SE POSANT SUR LA TÊTE D'UN UTILISATEUR ET PRODUISANT UNE IMAGE

(30) Priorität: 25.01.2017 DE 102017101352
(43) Veröffentlichungstag der Anmeldung: 04.12.2019
(73) Patentinhaber: tooz technologies GmbH, 73430 Aalen (DE)
(72) Erfinder: MENKE, Christoph, 73447 Oberkochen (DE)
(74) Vertreter: Patentanwälte Geyer, Fehners & Partner mbB
(86) Internationale Anmeldenummer: PCT/EP2018/050733
(87) Internationale Veröffentlichungsnummer: WO 2018/137945

(56) Entgegenhaltungen:
- WO-A1-2015/150269
- DE-B3- 102014 207 495
- US-A1- 2010 045 927
- US-A1- 2010 171 922
- US-A1- 2012 057 122
- US-A1- 2017 017 095
- US-A1- 2017 192 250
- US-A1- 2017 351 117
- US-B1- 6 384 982

## Beschreibung

Die vorliegende Erfindung betrifft ein Brillenglas für eine auf den Kopf eines Benutzers aufsetzbare und ein Bild erzeugende Anzeigevorrichtung gemäß dem Oberbegriff des Anspruches 1, eine Anzeigevorrichtung mit einem solchen Brillenglas sowie ein Verfahren zur Herstellung eines solchen Brillenglases.

Solche Brillengläser sind z.B. aus der WO 2015/150269 A1 bekannt und weisen eine Vorderseite, eine Rückseite, einen Einkoppelabschnitt, einen vom Einkoppelabschnitt beabstandeten Umlenkabschnitt, einen Austrittsabschnitt in der Rückseite sowie einen Lichtführungskanal auf, der Lichtbündel von Pixeln des erzeugten Bildes, die über den Einkoppelabschnitt des Brillenglases in das Brillenglas eingekoppelt sind, im Brillenglas bis zum Umlenkabschnitt führt, von dem sie in Richtung zum Austrittsabschnitt hin umgelenkt und dann durch den Austrittsabschnitt aus dem Brillenglas ausgekoppelt werden.

Ein solches Brillenglas kann Teil einer Abbildungsoptik einer auf den Kopf eines Benutzers aufsetzbaren und ein Bild erzeugenden Anzeigevorrichtung sein, wobei die Abbildungsoptik das erzeugte Bild im aufgesetzten Zustand der Anzeigevorrichtung so abbildet, dass es der Benutzer als virtuelles Bild wahrnehmen kann. Somit trägt das Brillenglas zu der gewünschten Funktionalität der Einspiegelung des erzeugten Bildes in das Gesichtsfeld des Benutzers bei.

Ausgehend hiervon ist es Aufgabe der Erfindung, ein Brillenglas der eingangs genannten Art so weiterzubilden, dass es für möglichst viele verschiedene Benutzer grundsätzlich die Funktion der Bildeinspiegelung bereitstellt.

Ferner soll eine Anzeigevorrichtung mit einem solchen Brillenglas sowie ein Herstellungsverfahren für ein solches Brillenglas bereitgestellt werden.

Die Erfindung ist in Anspruch 1 definiert.

Durch die Ausbildung des Brillenglases als Gleitsichtglas und die Anordnung des Austrittsabschnitts außerhalb des Fernbereiches und außerhalb des Nahbereiches (in Draufsicht auf die Rückseite des Brillenglases gesehen), kann das erfindungsgemäße Brillenglas für Benutzer bereitgestellt werden, die ein Gleitsichtglas benötigen. Nachdem der Austrittsabschnitt außerhalb des Fernbereiches und außerhalb des Nahbereiches angeordnet ist, wird dabei in vorteilhafter Weise der Bereich des Gleitsichtglases genutzt, der bei einer normalen Nutzung des Gleitsichtglases systembedingt (aufgrund des sogenannten Minkwitz-Theorems) so hohe Aberrationen aufweist, dass diese Bereiche des Gleitsichtglases vom Benutzer beim Durchblick durch das Gleitsichtglas nicht oder nur wenig genutzt werden.

Bei dem erfindungsgemäßen Gleitsichtglas unterscheidet sich die Krümmung (bzw. der Krümmungsverlauf) des Austrittsabschnittes von der Krümmung (bzw. dem Krümmungsverlauf) eines Zwischenbereiches der Rückseite zwischen dem Austrittsabschnitt und dem Nahbereich derart, dass die Fehlsichtigkeitskorrektur bei Betrachtung der Umgebung durch den Austrittsabschnitt schlechter ist als bei Betrachtung der Umgebung durch den Zwischenbereich.

Der Übergang vom Austrittsabschnitt zum umgebenden Bereich der Rückseite kann als stetiger und differenzierbarer Flächenabschnitt ausgebildet sein. Insbesondere kann die gesamte Rückseite als stetige und differenzierbare Fläche ausgebildet sein.

Ferner kann bei dem erfindungsgemäßen Brillenglas die Vorderseite gekrümmt und die Rückseite gekrümmt ausgebildet sein.

Die Führung der Lichtbündel im Brillenglas vom Einkoppelabschnitt bis zum Umlenkabschnitt kann durch Reflexionen (beispielsweise interne Totalreflexionen) bewirkt werden.

Bei dem erfindungsgemäßen Brillenglas kann die Rückseite als Freiformfläche ausgebildet sein, die die gewünschte Fehlsichtigkeitskorrektur bewirkt.

Ferner kann der Austrittsabschnitt sphärisch oder asphärisch gekrümmt sein. Insbesondere kann der Austrittsabschnitt als Freiformfläche ausgebildet sein.

Die vordere Seite des Brillenglases kann sphärisch gekrümmt sein.

Das erfindungsgemäße Brillenglas kann auch so ausgebildet sein, dass die Vorderseite als Freiformfläche zur Fehlsichtigkeitskorrektur ausgebildet und die Rückseite sphärisch gekrümmt ist. Durch diese Ausbildung wird der Vorteil erreicht, dass die Auskopplung der Lichtbündel durch die Rückseite und insbesondere durch den Austrittsabschnitt in der Rückseite unabhängig von der Wirkung des Gleitsichtglases erfolgt, da die Fehlsichtigkeitskorrektur durch die als Freiformfläche ausgebildete Vorderseite bewirkt wird. Ferner ist es möglich, sowohl die Vorderseite als auch die Rückseite jeweils als Freiformfläche auszubilden, die zusammen die gewünschte Fehlsichtigkeitskorrektur bewirken.

Bei dem erfindungsgemäßen Brillenglas kann der Astigmatismus im Austrittsabschnitt mindestens 1 Dioptrie und insbesondere mindestens 2 Dioptrien betragen.

Ferner kann bei dem erfindungsgemäßen Brillenglas der Astigmatismus im Nahbereich nicht größer als 1 Dioptrie und insbesondere nicht größer als 0,5 Dioptrien sein.

Bei dem erfindungsgemäßen Brillenglas können der Fernbereich und der Nahbereich, in Draufsicht auf die Rückseite des Brillenglases gesehen, zusammen T-förmig ausgebildet sein. Insbesondere kann der Fernbereich oberhalb des Nahbereiches liegen. Der Austrittsabschnitt kann rechts oder links neben dem Nahbereich angeordnet sein.

Das Brillenglas kann als einschaliges, zweischaliges oder mehrschaliges Brillenglas ausgebildet sein. Zur Führung der Lichtbündel im Brillenglas können Reflexionen an der Vorder- und/oder Rückseite stattfinden. Eine oder mehrere reflektive oder teilreflektive Schichten sind innerhalb des Brillenglases und beim Lichtführungskanal zur Führung der Lichtbündel vorgesehen. Es ist zusätzlich möglich, dass eine oder mehrere reflektive oder teilreflektive Schichten auf der Vorder- und/oder Rückseite zur Führung der Lichtbündel vorgesehen sind.

Der Umlenkabschnitt kann eine reflektive oder eine teilreflektive Umlenkfläche aufweisen. Ferner ist es möglich, dass der Umlenkabschnitt mehrere nebeneinander angeordnete reflektive oder teilreflektive Umlenkflächen aufweisen kann. Der Umlenkabschnitt kann so ausgebildet sein, dass er eine reine Strahlumlenkung bewirkt. Es ist jedoch auch möglich, dass der Umlenkabschnitt zusätzlich eine abbildende Eigenschaft aufweist. Dies kann durch eine entsprechende Anordnung der Umlenkflächen (die auch als Facetten bezeichnet werden können) realisiert werden. Zusätzlich oder alternativ kann dies durch einen Krümmungsverlauf der Umlenkflächen oder der einzelnen Umlenkfläche realisiert werden.

Die reflektiven oder teilreflektiven Facetten können zueinander versetzt in Art einer Zick-Zack-Linie oder einer Sägezahnlinie angeordnet sein.

Die Umlenkfläche oder die Umlenkflächen erstrecken sich bevorzugt nicht über die gesamte Dicke (Ausdehnung von der Vorderseite bis zur Rückseite) des Brillenglases, sondern nur über einen Teil davon. Insbesondere können die Umlenkfläche/Umlenkflächen als vergrabene Umlenkfläche/Umlenkflächen ausgebildet sein, die sich gerade bis zur Vorderseite oder nicht bis zur Vorderseite erstrecken. Die durch die Umlenkflächen eventuell vorhandenen Vertiefungen können so ausgeführt sein, dass eine durchgehende Vorderseite vorliegt.

Es wird ferner eine Anzeigevorrichtung mit einer auf den Kopf eines Benutzers aufsetzbaren Haltevorrichtung, einem an der Haltevorrichtung befestigten Bilderzeugungsmodul, das ein Bild erzeugt, und einer an der Haltevorrichtung befestigten Abbildungsoptik, die ein erfindungsgemäßes Brillenglas aufweist sowie das erzeugte Bild im auf dem Kopf des Benutzers ausgesetzten Zustand der Haltevorrichtung so abbildet, dass es der Benutzer als virtuelles Bild wahrnehmen kann, bereitgestellt.

Die Abbildungsoptik kann das Brillenglas als einziges optisches Element aufweisen. Es ist jedoch auch möglich, dass die Abbildungsoptik neben dem Brillenglas noch mindestens ein weiteres optisches Element umfasst. Das mindestens eine weitere optische Element kann vom Brillenglas beabstandet oder mit diesem verbunden sein. Ferner ist es möglich, dass das mindestens eine weitere optische Element einstückig mit dem Brillenglas ausgebildet ist.

Die Anzeigevorrichtung kann eine Steuereinheit aufweisen, die das Bilderzeugungsmodul ansteuert.

Das Bilderzeugungsmodul kann insbesondere einen flächigen Bildgeber aufweisen, wie z.B. ein LCD-Modul, ein LCoS-Modul, ein OLED-Modul oder eine Kippspiegelmatrix. Der Bildgeber kann eine Mehrzahl von Pixeln aufweisen, die z.B. in Zeilen und Spalten angeordnet sein können. Der Bildgeber kann selbstleuchtend oder nicht selbstleuchtend sein.

Das Bilderzeugungsmodul kann insbesondere so ausgebildet sein, dass es ein monochromatisches oder ein mehrfarbiges Bild erzeugt.

Die erfindungsgemäße Anzeigevorrichtung kann weitere, dem Fachmann bekannte Elemente aufweisen, die zum Betrieb der Anzeigevorrichtung notwendig sind.

Es wird ferner ein Verfahren zur Herstellung eines erfindungsgemäßen Brillenglases bereitgestellt, bei dem verschiedene Fehlsichtigkeitsbereiche, die jeweils durch einen Bereich der zu korrigierenden Aberrationen bestimmt sind, festgelegt werden, für jeden Fehlsichtigkeitsbereich ein Krümmungsverlauf des Austrittsabschnitts berechnet und dieser Austrittsabschnitt dem Fehlsichtigkeitsbereich zugeordnet wird, der Fehlsichtigkeitsbereich ermittelt wird, in dem der Aberrationswert des herzustellenden Brillenglases fällt, der Krümmungsverlauf der Rückseite des herzustellenden Brillenglases derart berechnet wird, dass der dem ermittelten Fehlsichtigkeitsbereich zugeordnete Austrittsabschnitt ausgewählt und sein Krümmungsverlauf bei Berechnung des Krümmungsverlaufes der Rückseite festgehalten und nicht geändert wird, und das Brillenglas basierend auf dem berechneten Krümmungsverlauf der Rückseite hergestellt wird.

Bei der zu korrigierenden Aberration kann es sich beispielsweise um die sphärische Aberration handeln. Die Fehlsichtigkeitsbereiche können sich dann beispielsweise über ± 2 Dioptrien, ± 1 Dioptrie oder ± 0,5 Dioptrien erstrecken. Damit ist es z.B. möglich, Fehlsichtigkeiten aus dem Bereich von - 10 bis + 10 Dioptrien in 5, 10 oder 20 Fehlsichtigkeitsbereiche zu unterteilen und für jeden dieser Fehlsichtigkeitsbereiche genau einen Krümmungsverlauf für den Austrittsabschnitt zu berechnen und diesem Fehlsichtigkeitsbereich zuzuordnen. Somit müssen nur 5, 10 oder 20 Krümmungsverläufe für den Austrittsabschnitt berechnet werden. Dies kann einmal durchgeführt werden und dann können die berechneten Krümmungsverläufe für den Austrittsabschnitt für die individuelle Auslegung eines Brillenglases eingesetzt werden. Dies erleichtert die Herstellung eines Gleitsichtglases für einen Benutzer deutlich. Es hat sich gezeigt, dass mit diesem Vorgehen hervorragende Abbildungseigenschaften für die Darstellung des virtuellen Bildes erzielt werden können.

Bei der zu korrigierenden Aberration kann es sich um eine einzelne Aberration (wie z.B. die sphärische Aberration) oder auch um mehrere verschiedene Aberrationen handeln.

Das erfindungsgemäße Verfahren zur Herstellung eines Brillenglases kann so weitergebildet werden, dass das erfindungsgemäße Brillenglas (einschließlich seiner Weiterbildungen) hergestellt werden kann.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine schematische perspektivische Darstellung einer Ausführung der erfindungsgemäßen Anzeigevorrichtung;
- Fig. 2: eine vergrößerte Teilschnittansicht des ersten Brillenglases einschließlich einer schematischen Darstellung des Bilderzeugungsmoduls;
- Fig. 3: eine schematische Schnittansicht des ersten Brillenglases;
- Fig. 4: eine Draufsicht auf die Rückseite 15 des ersten Brillenglases;
- Fig. 5: eine Draufsicht auf die Rückseite einer weiteren Ausführungsform des ersten Brillenglases mit Niveaulinien zur sphärischen Aberration;
- Fig. 6: eine Draufsicht auf die Rückseite des ersten Brillenglases 3 gemäß Fig. 5 mit Astigmatismusniveaulinien;
- Fig. 7: eine Draufsicht auf die Rückseite eines herkömmlichen ersten Brillenglases in gleicher Weise wie in Fig. 5;
- Fig. 8: eine Draufsicht auf die Rückseite eines herkömmlichen Brillenglases in gleicher Weise wie in Fig. 6, und
- Fig. 9 bis 11: vergrößerte Teilschnittansichten weiterer Ausführungsformen eines erfindungsgemäßen ersten Brillenglases einschließlich einer schematischen Darstellung des Bilderzeugungsmoduls.

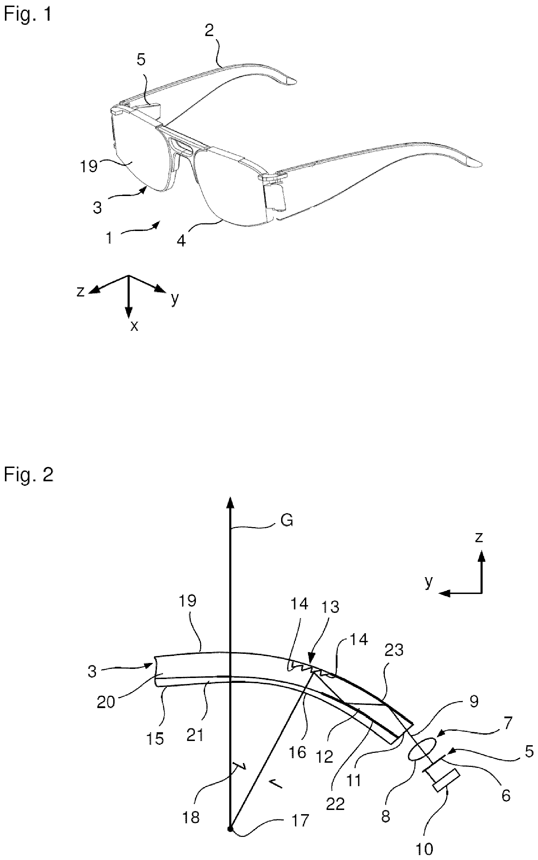

Bei der in Fig. 1 gezeigten Ausführungsform umfasst die erfindungsgemäße Anzeigevorrichtung 1 eine auf den Kopf eines Benutzers aufsetzbare Haltevorrichtung 2, die z.B. in Art eines herkömmlichen Brillengestells ausgebildet sein kann, sowie ein erstes und ein zweites Brillenglas 3, 4, die an der Haltevorrichtung 2 befestigt sind. Die Haltevorrichtung 2 mit den Brillengläsern 3 und 4 ist als Gleitsichtbrille zur Korrektur einer Fehlsichtigkeit ausgebildet, wobei dem Benutzer über das erste Brillenglas 3 ein virtuelles Bild in sein Gesichtsfeld eingespiegelt werden kann, wie nachfolgend beschrieben wird.

Dazu umfasst die Anzeigevorrichtung 1 ein Bilderzeugungsmodul 5, das im Bereich des rechten Brillenbügels 2 angeordnet sein kann, wie in Fig. 1 schematisch dargestellt ist. Das Bilderzeugungsmodul 5 kann ein flächiges Bilderzeugungselement 6 (Fig. 2), wie z.B. einen OLED-, einen CMOS- oder einen LCoS-Chip oder eine Kippspiegelmatrix, mit einer Vielzahl von z.B. in Spalten und Zeilen angeordneten Pixeln aufweisen.

Die Brillengläser 3 und 4 und insbesondere das erste Brillenglas 3 sind nur beispielshalber zusammen mit der erfindungsgemäßen Anzeigevorrichtung 1 beschrieben. Die Brillengläser 3, 4 bzw. zumindest das erste Brillenglas 3 sind jeweils für sich als erfindungsgemäßes Brillenglas 3, 4 ausgebildet.

Wie am besten aus der vergrößerten schematischen Teilschnittansicht in Fig. 2 ersichtlich ist, weist die Anzeigevorrichtung 1 eine Abbildungsoptik 7 auf, die ein zwischen dem Bilderzeugungselement 6 bzw. dem Bildgeber 6 und dem ersten Brillenglas 3 angeordnetes Optikelement 8 enthält. Des Weiteren dient das erste Brillenglas 3 selbst auch als Teil der Abbildungsoptik 7.

Von jedem Pixel des Bildgebers 6 kann ein Lichtbündel 9 ausgehen. Durch eine entsprechende Ansteuerung der Pixel des Bildgebers 6 mittels einer Steuereinheit 10, die Teil des Bilderzeugungsmoduls 5 sein kann, kann das gewünschte Bild erzeugt werden. In Fig. 2 ist stellvertretend für die Lichtbündel 9 der Strahlengang eines Lichtstrahls eingezeichnet, so dass nachfolgend auch von dem Lichtstrahl 9 die Rede ist.

Der vom Bildgeber 6 ausgehende Lichtstrahl 9 läuft durch das Optikelement 8 und tritt über einen Einkoppelabschnitt 11 (hier die Stirnseite des ersten Brillenglases 3) in das erste Brillenglas 3 ein und wird in diesem entlang eines Lichtführungskanals 12 bis zu einem Umlenkabschnitt 13 geführt. Der Umlenkabschnitt 13 weist hier mehrere nebeneinander angeordnete teilreflektive Umlenkflächen 14 (die auch als teilreflektive Facetten bezeichnet werden können) auf, an denen eine Reflexion der Lichtstrahlen 9 in Richtung zu einer Rückseite 15 des ersten Brillenglases 3 stattfindet, so dass die Lichtstrahlen 9 über einen Austrittsabschnitt 16 der Rückseite 15 aus dem ersten Brillenglas 3 austreten. Somit kann ein Benutzer, wenn er die erfindungsgemäße Anzeigevorrichtung 1 bestimmungsgemäß auf dem Kopf trägt, das mittels des Bildgebers 6 erzeugte Bild als virtuelles Bild wahrnehmen, wenn er auf den Umlenkabschnitt 13 blickt. In Fig. 2 ist zur Verdeutlichung der Drehpunkt 17 des Auges des Benutzers sowie die Eyebox 18 bzw. die Austrittspupille 18 der Abbildungsoptik 7 eingezeichnet. Die Eyebox 18 ist der Bereich, in dem sich das Auge des Benutzers bewegen kann und er stets noch das erzeugte Bild als virtuelles Bild wahrnehmen kann.

Obwohl bei der beschriebenen Ausführungsform die Einkopplung in die Stirnseite des ersten Brillenglases 3 durchgeführt ist und somit der Einkoppelabschnitt 11 auf der Stirnseite des ersten Brillenglases ausgebildet ist, ist es auch möglich, eine Einkopplung über die Rückseite 15 des ersten Brillenglases 3 durchzuführen.

Wie in der schematischen Darstellung in Fig. 2 gezeigt ist, sind die Rückseite 15 und eine Vorderseite 19 des ersten Brillenglases 3 jeweils gekrümmt ausgebildet. Das erste Brillenglas 3 ist ferner zweischalig ausgebildet und umfasst eine Außenschale 20 sowie eine Innenschale 21. Die von der Innenschale 21 wegweisende Seite der Außenschale 20 bildet die gekrümmte Vorderseite 19 des ersten Brillenglases 3 und die von der Außenschale 20 wegweisende Seite der Innenschale 21 bildet die Rückseite 15 des ersten Brillenglases 3.

Zur Bildung des Lichtführungskanals 12 ist zwischen der Außen- und Innenschale 20, 21 eine erste Reflexionsfläche 22 ausgebildet, die sich vom Einkoppelabschnitt 11 bis zum Umlenkabschnitt 13 erstreckt. Ferner kann an der Vorderseite 19 eine der ersten Reflexionsfläche 22 gegenüberliegende zweite Reflexionsfläche 23 ausgebildet sein, die sich wiederum vom Einkoppelabschnitt 11 bis zum Umlenkabschnitt 13 erstreckt. Die beiden Reflexionsflächen 22 und 23 sind bevorzugt teilreflektiv ausgebildet. Die über den Einkoppelabschnitt 11 eingekoppelten Lichtbündel können somit im Lichtführungskanal 12 durch Reflexionen an den Reflexionsflächen 22 und 23 vom Einkoppelabschnitt 11 bis zum Umlenkabschnitt 13 geführt werden. Die zweite Reflexionsfläche 23 kann auch weggelassen werden. In diesem Fall wird an der Vorderseite 19 im Bereich des Lichtführungskanals 12 bevorzugt eine innere Totalreflexion für die Lichtbündel 9 bewirkt, um die gewünschte Führung der Lichtbündel im Lichtführungskanal 12 zu gewährleisten.

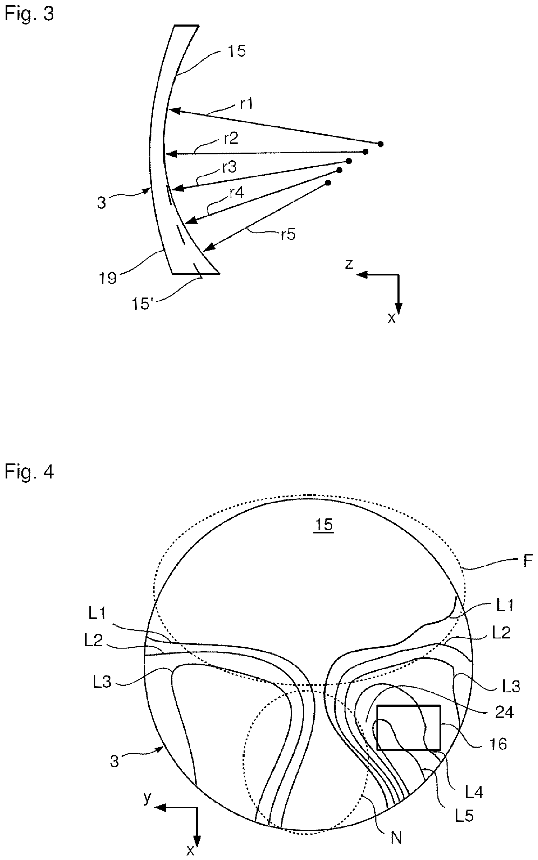

In Fig. 3 ist eine schematische Schnittansicht in der z-x-Ebene des ersten Brillenglases 3 gezeigt, das als Gleitsichtglas ausgebildet ist. Die Vorderseite 19 ist hierbei sphärisch gekrümmt und die Rückseite 15 weist eine asphärische Krümmung mit zunehmender Krümmung in x-Richtung (und somit mit abnehmendem Krümmungsradien r1, r2, r3, r4, r5 in x-Richtung) auf, so dass der obere Bereich für die Fernsicht und der untere Bereich für die Nahsicht korrigiert ist. Zur Verdeutlichung ist der Krümmungsverlauf mit konstantem Krümmungsradius r1 gestrichelt eingezeichnet, der mit dem Bezugszeichen 15' bezeichnet ist.

Der Krümmungsradius r1 bezeichnet somit die Krümmung für die Fernsicht. Der Krümmungsradius r5 bezeichnet den Krümmungsradius für die Nahsicht und die Krümmungsradien r2 - r4 sind die Krümmungsradien in dem Übergangsbereich zwischen Fernsicht und Nahsicht. Somit weist das erste Brillenglas einen gleitenden (d.h. stufenlosen) Dioptriezahl-Übergang zwischen dem (oberen) Fernteil und dem (unteren) Nahteil auf. Die notwendige höhere Krümmung des ersten Brillenglases 3 im unteren Bereich führt zu astigmatischen Fehlern in der Übergangszone im seitlichen Sehfeld. Dieser Effekt wird häufig auch als Minkwitz-Theorem bezeichnet.

Dieser astigmatische Fehler ist in der schematischen Draufsicht auf die Rückseite 15 in Fig. 4 in Art von Höhenlinien für gleichen astigmatischen Fehler schematisch dargestellt. Die Linien L1, L2, L3, L4 und L5 entsprechen dabei einem astigmatischen Fehler von 0, 1, 2, 3 bzw. 4 Dioptrien. Somit liegt beispielsweise der astigmatische Fehler bei der Linie L3 bei 2 Dioptrien. Unter dem astigmatischen Fehler wird hier der Betrag der Differenz der Brechkraft in y-Richtung und der Brechkraft in x-Richtung verstanden.

Somit weist das Gleitsichtglas 3 einen oberen Fernbereich F für die Fernsicht und einen unteren Nahbereich N für die Nahsicht auf, wobei der Nahbereich N aufgrund des nicht vermeidbaren astigmatischen Fehlers im seitlichen Sehfeld (Minkwitz-Theorem) eine deutlich geringere Ausdehnung in y-Richtung aufweist als der Fernbereich F. Fernbereich F und Nahbereich N bilden somit zusammen eine T-Form bei Draufsicht auf die Rückseite 15.

Das erste Brillenglas 3 ist nun so ausbildet, dass der Austrittsabschnitt 16 (in der Darstellung von Fig. 4 gesehen) rechts unten liegt, so dass ein Benutzer bei aufgesetzter Anzeigevorrichtung relativ zum Geradeblick G (Fig. 2) nach rechts unten blicken muss, um das erzeugte Bild als virtuelles Bild wahrnehmen zu können. Damit die Bilddarstellung möglichst ohne astigmatische Fehler (die gerade in diesem Bereich des Gleitsichtglases 3 an der asphärischen Rückseite 15 auftreten) erzeugt werden kann, ist der Krümmungsverlauf der Rückseite 15 im Austrittsabschnitt 16 anders oder verschieden zu dem Krümmungsverlauf des an den Austrittsabschnitt 16 unmittelbar angrenzenden Umgebung der Rückseite 15. Insbesondere ist die gesamte Abbildungsoptik 7 und daher auch die Krümmung des Austrittsabschnitts 16 so ausgelegt, dass eine möglichst verzeichnungsfreie Abbildung stattfindet. Dies kann beispielsweise dazu führen, dass bei Betrachtung der Umgebung durch den Austrittsabschnitt 16, wenn kein Bild erzeugt und als virtuelles Bild abgebildet wird, eine schlechtere Fehlsichtigkeitskorrektur vorliegt im Vergleich zu dem Fall, bei dem keine spezielle Anpassung der Krümmung des Austrittsabschnittes 16 vorliegen würde. Man kann auch sagen, dass die Fehlsichtigkeitskorrektur bei Betrachtung der Umgebung durch den Austrittsabschnitt 16 schlechter ist als bei Betrachtung der Umgebung durch einen Abschnitt 24, der zwischen dem Austrittsabschnitt 16 und dem Nahbereich N liegt.

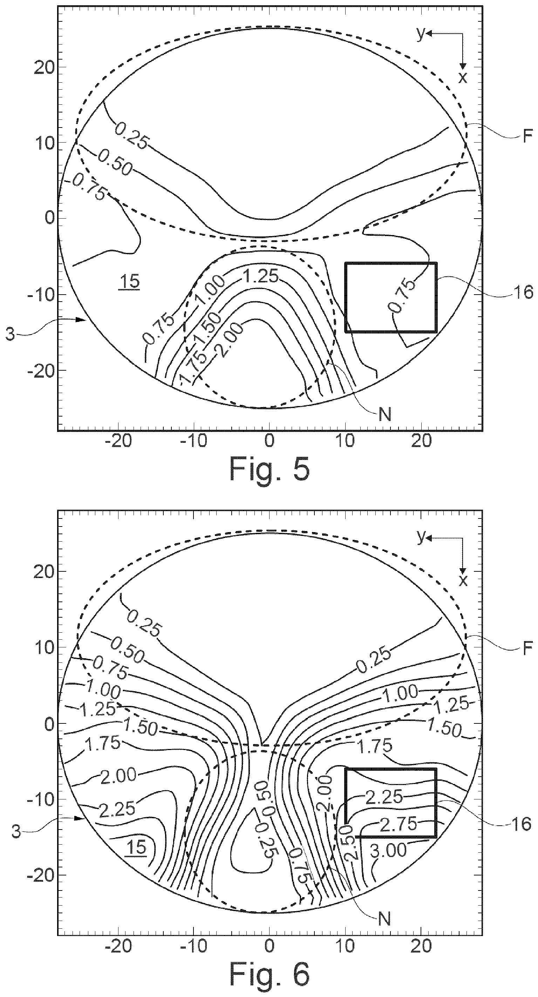

In Fig. 5 ist in Draufsicht die Rückseite einer Ausführungsform des erfindungsgemäßen Gleitsichtglases 3 gezeigt, wobei die Brechkraft (sphärische Wirkung) in Dioptrien mit Niveaulinien dargestellt ist. Die Abmessungen in x- und y-Richtung sind in Millimetern angegeben. Das Gleitsichtglas ist für einen Benutzer ausgelegt, der für die Fernsicht keine Korrektur und für die Nahsicht eine Korrektur von + 2 Dioptrien benötigt. In Fig. 6 ist in gleicher Weise wie in Fig. 5 eine Draufsicht auf die Rückseite 15 des Brillenglases von Fig. 5 gezeigt, wobei in Fig. 6 Niveaulinien für den Astigmatismus des Gleitsichtglases 3 eingezeichnet sind. Wie den Darstellungen in Fig. 5 und 6 entnommen werden kann, liegt der Austrittsabschnitt 16 außerhalb des Fernbereiches F und außerhalb des Nahbereiches N im unteren seitlichen (hier rechten) Sehfeld. In diesem Bereich liegt eine geringe Brechkraft (hier ein Bereich von 0,75 Dioptrie) und ein großer Astigmatismus (hier im Bereich von ≥ 2) vor. Jedoch ist der Krümmungsverlauf des Austrittsabschnitts 16 so ausgelegt, dass eine gute und somit möglichst fehlerfreie Wahrnehmung des erzeugten Bildes als virtuelles Bild möglich ist.

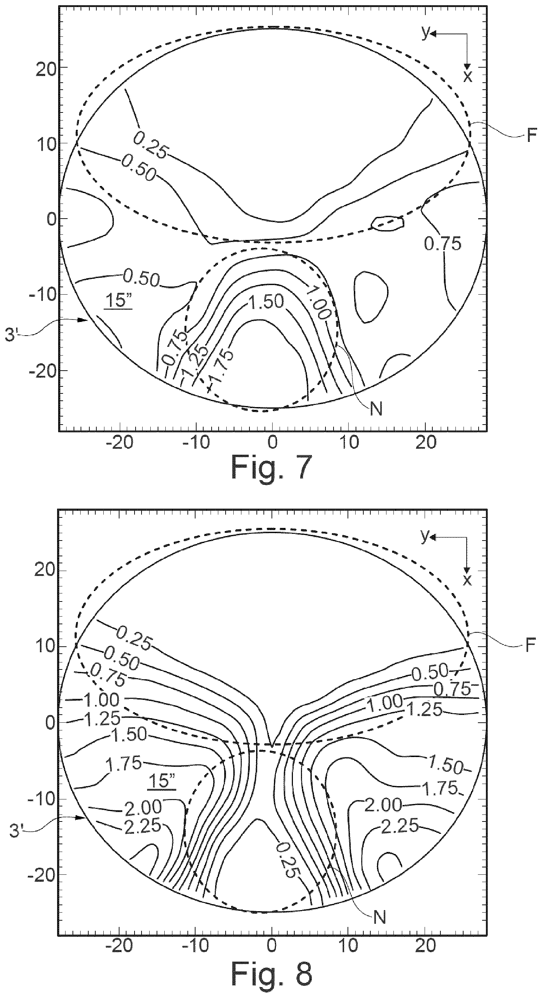

In Fig. 7 und 8 ist ein herkömmliches Gleitsichtglas 3' in gleicher Weise wie in Fig. 5 und 6 gezeigt. So ist in Fig. 7 in Draufsicht auf die Rückseite 15" die Brechkraft (sphärische Wirkung) in Dioptrien und in Fig. 8 der Astigmatismus für ein Brillenglas gezeigt, das im Fernbereich F keine Korrektur und im Nahbereich N eine Korrektur von + 2 Dioptrien aufweisen soll. Wie ein Vergleich der Figuren 7 und 8 mit den Figuren 5 und 6 zeigt, ist bei dem herkömmlichen Brillenglas 3' im unteren rechten Sehfeld ein geringerer Astigmatismus vorhanden als im vergleichbaren Bereich (Austrittsabschnitt 16) des erfindungsgemäßen Brillenglases 3 gemäß Fig. 6. Dies zeigt, dass das erfindungsgemäße Brillenglas 3 für die Durchsicht im rechten unteren Sehfeld schlechtere Eigenschaften aufweist als ein herkömmliches Gleitsichtglas 3' für denselben Benutzer mit gleichen Rahmenbedingungen (also hier ein Fernbereich F ohne Fehlsichtigkeitskorrektur und ein Nahbereich N mit einer Fehlsichtigkeitskorrektur von +2 Dioptrien). Da aber dieser untere rechte Sehfeldbereich bei einem Gleitsichtglas systembedingt für den Benutzer nicht nutzbar ist, ist diese Verschlechterung in Durchsicht kein Nachteil. Im Gegenteil, in vorteilhafter Weise wird dieser eigentlich ungenutzte Bereich des Gleitsichtglases 3 nun in vorteilhafter Weise für die Erzeugung des gewünschten virtuellen Bildes genutzt.

Die Krümmung des Austrittsabschnitts 16 kann beispielsweise sphärisch oder asphärisch sein. Bevorzugt ist der Übergang zwischen dem Austrittsabschnitt 16 und dem unmittelbar angrenzenden Bereich der Rückseite 15 (z.B. Abschnitt 24) so ausgelegt, dass er stetig und differenzierbar ist. Insbesondere ist bevorzugt die gesamte Rückseite 15 als stetige und differenzierbare Fläche ausgebildet.

Bei dem hier beschriebenen Ausführungsbeispiel dient die Innenschale 21 bzw. der Krümmungsverlauf der Rückseite 15 als Korrekturfläche, die die gewünschte Gleitsichtfunktionalität bereitstellt.

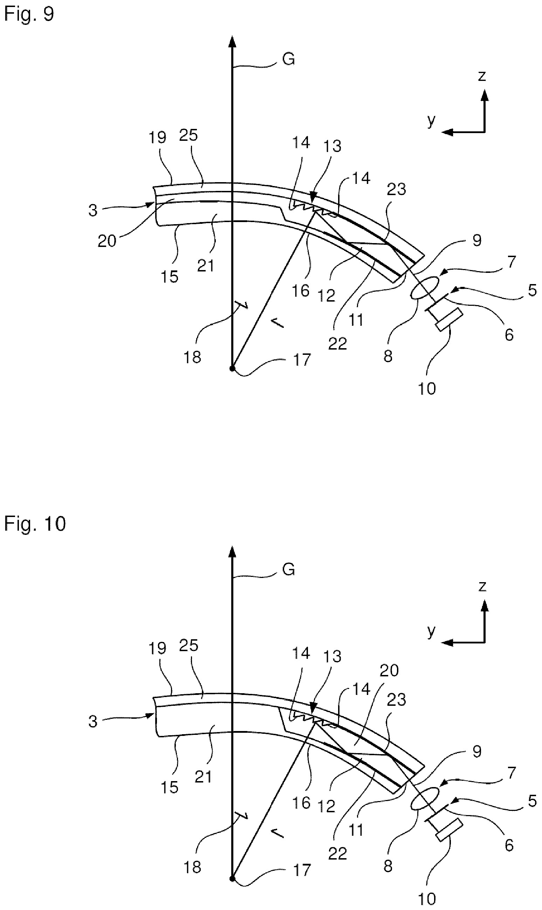

Das erste Brillenglas 3 kann auch dreischalig ausgebildet sein, wie in Fig. 9 schematisch dargestellt ist. Die Darstellung von Fig. 9 entspricht der von Fig. 2 und gleiche Elemente sind mit gleichen Bezugszeichen bezeichnet. Wie in Fig. 9 gezeigt ist, ist auf der Außenschale 20 eine zweite Außenschale 25 angeordnet, die mit der Außenschale 20 verbunden (beispielsweise verklebt) ist. Die von der Innenschale 21 wegweisende Seite der zweiten Außenschale 25 bildet die Vorderseite.

Bei der hier beschriebenen Ausführungsform ist die Außenschale 20, die bei dem dreischaligen Aufbau auch als Kanalschale 24 bezeichnet werden kann, im Bereich des Lichtführungskanals 12 dicker als im restlichen Bereich. Natürlich kann die Kanalschale 20 auch mit konstanter Dicke ausgebildet sein. Ferner erstreckt sich die Kanalschale 20 über das gesamte erste Brillenglas 3 und kann somit auch als Abstandsschale 20 bezeichnet werden, da sie stets zwischen der Innenschale 21 und der zweiten Außenschale 25 liegt, so dass die zweite Außenschale 25 nie in direktem Kontakt mit der Innenschale 21 steht.

Es ist jedoch auch möglich, dass sich die Kanalschale 20 nicht über das gesamte erste Brillenglas 3 erstreckt. Insbesondere kann sich die Kanalschale 20 nur im Bereich des Lichtführungskanals 12 erstrecken. In diesem Fall kann in den anderen Bereichen, in denen die Kanalschale 20 nicht vorhanden ist, ein direkter Kontakt zwischen der Innenschale 21 und der zweiten Außenschale 25 vorliegen, wie in Fig. 10 schematisch dargestellt ist.

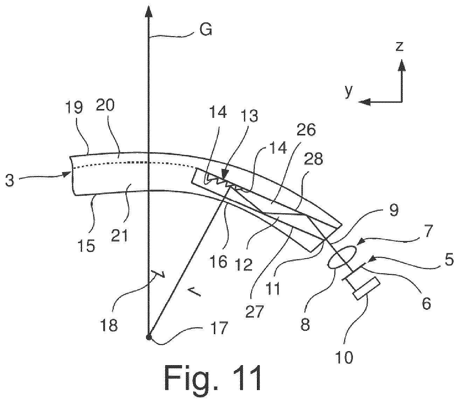

In Fig. 11 ist eine weitere Ausführungsform gezeigt, bei der der Lichtführungskanal 12 in dem ersten Brillenglas 3 durch eine planparallele Kanalplatte 26 gebildet ist. Die Reflexionen zur Lichtführung der Lichtstrahlen 9 finden dabei an den beiden Seitenflächen 27 und 28 der Kanalplatte 26 statt. Dies kann durch eine entsprechende Reflexionsschicht an den Seitenflächen 27, 28 realisiert werden. Ferner ist es möglich, die Kanalplatte 26 so im Brillenglas 3 anzuordnen, dass ein kleiner Luftspalt zwischen den Seitenflächen 27 und 28 und dem restlichen Brillenglas 3 vorliegt, so dass eine Lichtführung durch innere Totalreflexion an den Seitenflächen 27 und 28 bereitgestellt wird. Das Brillenglas 3 kann dabei einschalig ausgebildet sein oder auch mindestens zweischalig, wie durch die gestrichelte Linie 29 angedeutet ist.

Bei der erfindungsgemäßen Anzeigevorrichtung 1 erfolgt die Einspiegelung des virtuellen Bildes in das Gesichtsfeld des Benutzers über das erste Brillenglas 3. Natürlich ist auch eine Einspiegelung über das zweite Brillenglas 4 möglich. Des Weiteren kann die Anzeigevorrichtung 1 so ausgebildet sein, dass das virtuelle Bild über beide Brillengläser 3, 4 eingespiegelt wird. Dabei kann die Einspiegelung so erfolgen, dass ein dreidimensionaler Bildeindruck entsteht. Dies ist jedoch nicht zwingend notwendig.

Die Haltevorrichtung 2 muss nicht als brillenartige Haltevorrichtung 2 ausgebildet sein. Es ist auch jede andere Art der Haltevorrichtung 2 möglich, mit der ein Aufsetzen und Tragen der Anzeigevorrichtung 1 auf dem Kopf erfolgen kann.

Da in der Praxis unterschiedliche Fehlsichtigkeiten vorkommen, kann die Krümmung der Rückseite 15 beispielsweise so individuell angepasst werden, dass Fehlsichtigkeiten aus dem Bereich von - 10 bis + 10 Dioptrien korrigiert werden können. Nachdem auch die Abbildungsoptik 7 des Datenkanals auf die individuelle Fehlsichtigkeit angepasst sein muss, müsste man für jede Fehlsichtigkeit auch die Krümmung des Austrittsabschnittes 16 anpassen. Man würde somit für jede Fehlsichtigkeit einen individuellen Datenkanal (Abbildungsoptik 7) auslegen. Dies wäre jedoch ein sehr hoher Aufwand. In vorteilhafter Weise kann daher der Datenkanal für einen vorbestimmten Fehlsichtigkeitsbereich ausgelegt werden. So kann z.B. der Dioptriebereich von -10 Dioptrie bis + 10 Dioptrie in 5, 10 oder 20 Bereiche unterteilt werden, die dann jeweils eine Breite von ± 2 Dioptrie, ± 1 Dioptrie oder ± 0,5 Dioptrie abdecken. Es liegen somit 5, 10 oder 20 individuell ausgelegte und schon vorher berechnete Datenkanäle vor, bei denen sämtliche Abmessungen und Krümmungen bereits vorgegeben sind. Auch die Krümmung des Austrittsabschnitts 16 ist schon vorgegeben. Bei der Auslegung der Krümmung der Innenseite 15 im restlichen Bereich wird dann die Krümmung des Austrittsabschnittes 16 festgehalten und nicht geändert. Damit kann in einfacher Art und Weise ein individuell angepasstes Gleitsichtglas 3 hergestellt werden, das darüber hinaus noch eine hervorragende Abbildungseigenschaft für das dargestellte virtuelle Bild bzw. für die Dateneinspiegelung bereitstellt.

## Patentansprüche

1. Brillenglas für eine auf den Kopf eines Benutzers aufsetzbare und ein Bild erzeugende Anzeigevorrichtung (1),
wobei das Brillenglas (3) eine Vorderseite (19) und eine Rückseite (15),
einen Einkoppelabschnitt (11) und einen vom Einkoppelabschnitt (11) beabstandeten Umlenkabschnitt (13),
einen Austrittsabschnitt (16) in der Rückseite (15) sowie
einen Lichtführungskanal (12) aufweist, der Lichtbündel (9) von Pixeln des erzeugten Bildes, die über den Einkoppelabschnitt (11) des Brillenglases (3, 4) in das Brillenglas (3, 4) eingekoppelt sind, im Brillenglas (3, 4) bis zum Umlenkabschnitt (13) führt, von dem sie in Richtung zum Austrittsabschnitt (16) hin umgelenkt und dann durch den Austrittsabschnitt (16) aus dem Brillenglas (3, 4) ausgekoppelt werden,
wobei der Lichtführungskanal (12) innerhalb des Brillenglases (3, 4) eine reflektive oder teilreflektive Schicht (22) aufweist, an der zur Lichtführung der Lichtbündel mindestens eine Reflexion stattfindet,
wobei das Brillenglas (3, 4) als Gleitsichtglas mit einem Fernbereich (F) und einem Nahbereich (N) ausgebildet ist und der Austrittsabschnitt (16), in Draufsicht auf die Rückseite (15) des Brillenglases (3, 4) gesehen, außerhalb des Fernbereichs (F) und außerhalb des Nahbereichs (N) liegt,
**dadurch gekennzeichnet, dass**
sich die Krümmung des Austrittsabschnitts (16) von der Krümmung eines Zwischenbereichs (24) der Rückseite zwischen dem Austrittsabschnitt (16) und dem Nahbereich (N) derart unterscheidet, dass die Fehlsichtigkeitskorrektur bei Betrachtung der Umgebung durch den Austrittsabschnitt (16) schlechter ist als bei Betrachtung der Umgebung durch den Zwischenbereich (24).

2. Brillenglas nach Anspruch 1, bei dem die gesamte Rückseite (15) als stetige und differenzierbare Fläche ausgebildet ist.

3. Brillenglas nach einem der obigen Ansprüche, bei dem die Vorderseite (19) gekrümmt und die Rückseite (15) gekrümmt ausgebildet ist.

4. Brillenglas nach einem der obigen Ansprüche, bei dem die Rückseite (15) als Freiformfläche ausgebildet ist, die die Fehlsichtigkeitskorrektur bewirkt.

5. Brillenglas nach einem der obigen Ansprüche, bei dem der Austrittsabschnitt (16) sphärisch gekrümmt ausgebildet ist.

6. Brillenglas nach einem der Ansprüche 1 bis 4, bei dem der Austrittsabschnitt (16) asphärisch gekrümmt ausgebildet ist.

7. Brillenglas nach einem der obigen Ansprüche, bei dem die Vorderseite sphärisch gekrümmt ist.

8. Brillenglas nach einem der obigen Ansprüche, bei dem der Astigmatismus im Austrittsabschnitt (16) größer als 1 Dioptrie oder größer als 2 Dioptrien ist.

9. Brillenglas nach einem der obigen Ansprüche, bei dem der Astigmatismus im Nahbereich (N) nicht größer als 1 Dioptrie oder nicht größer als 0,5 Dioptrien ist.

10. Anzeigevorrichtung mit
einer auf den Kopf eines Benutzers aufsetzbaren Haltevorrichtung (2),
einem an der Haltevorrichtung (2) befestigten Bilderzeugungsmodul (5), das ein Bild erzeugt, und
einer an der Haltevorrichtung (2) befestigten Abbildungsoptik, die ein Brillenglas (3, 4) nach einem der obigen Ansprüche aufweist und die das erzeugte Bild im auf dem Kopf des Benutzers aufgesetzten Zustand der Haltevorrichtung (2) so abbildet, dass es der Benutzer als virtuelles Bild wahrnehmen kann.

11. Verfahren zur Herstellung eines Brillenglases nach einem der Ansprüche 1 bis 9, bei dem verschiedene Fehlsichtigkeitsbereiche, die jeweils durch einen Bereich der zu korrigierenden Aberrationen bestimmt sind, festgelegt werden,
für jeden Fehlsichtigkeitsbereich ein Krümmungsverlauf des Austrittsabschnitts berechnet und dieser Austrittsabschnitt dem Fehlsichtigkeitsbereich zugeordnet wird,
der Fehlsichtigkeitsbereich ermittelt wird, in den der Aberrationswert des herzustellenden Brillenglases fällt,
der Krümmungsverlauf der Rückseite des herzustellenden Brillenglases damit berechnet wird, dass der dem ermittelten Fehlsichtigkeitsbereich zugeordnete Austrittsabschnitt ausgewählt und sein Krümmungsverlauf bei Berechnung des Krümmungsverlaufes der Rückseite festgehalten und nicht geändert wird,
und das Brillenglas basierend auf dem berechneten Krümmungsverlauf der Rückseite hergestellt wird.

## Claims

1. A spectacle lens for a display device (1) which can be placed on the head of a user and generates an image,
wherein the spectacle lens (3) comprises a front side (19) and a rear side (15),
an input section (11) and a deflection section (13) separated from the input section (11), an exit section (16) in the rear side (15), and
a light guide channel (12) which guides light beams (9) from pixels of the generated image, which are input into the spectacle lens (3, 4) through the input section (11) of the spectacle lens (3, 4), in the spectacle lens (3, 4) as far as the deflection section (13), by which they are deflected in the direction of the exit section (16) and are then output from the spectacle lens (3, 4) through the exit section (16),
wherein the light guide channel (12) within the spectacle lens (3, 4) comprises a reflective or partially reflective layer (22) at which at least one reflection takes place for guiding the light beams,
wherein the spectacle lens (3, 4) is configured as a progressive power lens with a far-field region (F) and a near-field region (N), and the exit section (16), as seen in a plan view of the rear side (15) of the spectacle lens (3, 4), lies outside the far-field region (F) and outside the near-field region (N),
**characterized in that**,
wherein the curvature of the exit section (16) differs from the curvature of an intermediate region (24) of the rear side between the exit section (16) and the near-field region (N) in such a way that the ametropia correction when viewing the environment through the exit section (16) is inferior than when viewing the environment through the intermediate region (24).

2. The spectacle lens as claimed in claim 1, wherein the entire rear side (15) is configured as a continuous and differentiable surface.

3. The spectacle lens as claimed in one of the preceding claims, wherein the front side (19) is configured to be curved and the rear side (15) is configured to be curved.

4. The spectacle lens as claimed in one of the preceding claims, wherein the rear side (15) is configured as a freeform surface which carries out the ametropia correction.

5. The spectacle lens as claimed in one of the preceding claims, wherein the exit section (16) is configured to be spherically curved.

6. The spectacle lens as claimed in one of claims 1 to 4, wherein the exit section (16) is configured to be aspherically curved.

7. The spectacle lens as claimed in one of the preceding claims, wherein the front side is spherically curved.

8. The spectacle lens as claimed in one of the preceding claims, wherein the astigmatism in the exit section (16) is more than 1 diopter or more than 2 diopters.

9. The spectacle lens as claimed in one of the preceding claims, wherein the astigmatism in the near-field region (N) is not more than 1 diopter or not more than 0.5 diopters.

10. A display device having
a holding device (2) which can be placed on the head of a user,
an image generation module (5), which generates an image and which is fastened on the holding device (2), and
imaging optics, which are fastened on the holding device (2) and which comprise a spectacle lens (3, 4) as claimed in one of the preceding claims and which image the generated image in the state of the holding device (2) placed on the head of the user, so that the user can perceive it as a virtual image.

11. A method for producing a spectacle lens as claimed in one of claims 1 to 9, wherein different ametropia ranges, which are respectively determined by a range of the aberrations to be corrected, are defined,
for each ametropia range, a curvature profile of the exit section is calculated and this exit section is assigned to the ametropia range,
the ametropia range in which the aberration value of the spectacle lens to be produced lies is determined,
the curvature profile of the rear side of the spectacle lens to be produced is calculated therewith that the exit section assigned to the ametropia range determined is selected and its curvature profile is kept constant and not changed during the calculation of the curvature profile of the rear side,
and the spectacle lens is produced on the basis of the calculated curvature profile of the rear side.

## Revendications

1. Verre de lunettes pour un dispositif d'affichage (1) apte à être placé sur la tête d'un utilisateur et générant une image,
le verre de lunettes (3) présentant une face avant (19) ainsi qu'une face arrière (15),
une partie d'injection (11) et une partie de déviation (13) espacée de la partie d'injection (11),
une partie de sortie (16) dans la face arrière (15) ainsi qu'
un canal (12) de guidage de la lumière, qui guide les faisceaux de lumière (9) des pixels de l'image générée, qui sont injectés dans le verre de lunettes (3, 4) par la partie d'injection (11) du verre de lunettes (3, 4), dans le verre de lunettes (3, 4) jusqu'à la partie de déviation (13), à partir de laquelle ils sont déviés en direction de la partie de sortie (16) puis émis hors du verre de lunettes (3, 4) par la partie de sortie (16),
le canal (12) de guidage de la lumière à l'intérieur du verre de lunettes (3, 4) présentant une couche réfléchissante ou partiellement réfléchissante (22) sur laquelle au moins une réflexion a lieu pour guider les faisceaux lumineux,
le verre de lunettes (3, 4) étant conçu sous la forme d'un verre progressif avec une zone de vision de loin (F) et une zone de vision de près (N) et la partie de sortie (16), vue de dessus sur la face arrière (15) du verre de lunettes (3, 4), se trouvant en dehors de la zone de vision de loin (F) et en dehors de la zone de vision de près (N),
**caractérisé en ce que**
la courbure de la partie de sortie (16) diffère de la courbure d'une zone intermédiaire (24) de la face arrière entre la partie de sortie (16) et la zone de vision de près (N) de telle sorte que la correction de l'amétropie est moins bonne lorsque l'on regarde l'environnement à travers la partie de sortie (16) que lorsque l'on regarde l'environnement à travers la zone intermédiaire (24).

2. Verre de lunettes selon la revendication 1, dans lequel toute la face arrière (15) est conçue sous la forme d'une surface continue et différenciable.

3. Verre de lunettes selon l'une des revendications ci-dessus, dans lequel la face avant (19) est incurvée et la face arrière (15) est incurvée.

4. Verre de lunettes selon l'une des revendications ci-dessus, dans lequel la face arrière (15) est conçue sous la forme d'une surface de forme libre qui permet de corriger l'amétropie.

5. Verre de lunettes selon l'une des revendications ci-dessus, dans lequel la partie de sortie (16) est conçue avec une courbure sphérique.

6. Verre de lunettes selon l'une des revendications 1 à 4, dans lequel la partie de sortie (16) est réalisée avec une courbure asphérique.

7. Verre de lunettes selon l'une des revendications ci-dessus, dans lequel la face avant est courbée de manière sphérique.

8. Verre de lunettes selon l'une des revendications ci-dessus, dans lequel l'astigmatisme dans la partie de sortie (16) est supérieur à 1 dioptrie ou supérieur à 2 dioptries.

9. Verre de lunettes selon l'une des revendications ci-dessus, dans lequel l'astigmatisme dans la zone de vision de près (N) n'est pas supérieur à 1 dioptrie ou n'est pas supérieur à 0,5 dioptrie.

10. Dispositif d'affichage comprenant
un dispositif de maintien (2) apte à être placé sur la tête d'un utilisateur,
un module (5) de formation d'image fixé au dispositif de maintien (2), qui génère une image, et
un système optique d'imagerie fixé au dispositif de maintien (2), qui présente un verre de lunettes (3, 4) selon l'une des revendications ci-dessus et qui reproduit l'image générée lorsque le dispositif de maintien (2) est placé sur la tête de l'utilisateur de telle sorte que l'utilisateur puisse la percevoir comme une image virtuelle.

11. Procédé de fabrication d'un verre de lunettes selon l'une des revendications 1 à 9, dans lequel sont définies différentes zones de défauts de vision, qui sont chacune déterminées par une zone des aberrations à corriger,
Un tracé de courbure de la partie de sortie est calculé pour chaque zone de défaut de vision et cette partie de sortie est attribuée à la zone de défaut de vision,
la zone de défaut de vision est déterminée, dans laquelle se situe la valeur d'aberration du verre de lunettes à fabriquer,
Le tracé de la courbure de la face arrière du verre de lunettes à fabriquer est calculée en sélectionnant la partie de sortie attribuée à la zone de défaut de vision déterminée et en enregistrant sa courbure lors du calcul de la courbure de la face arrière, sans la modifier,
et le verre de lunettes est fabriqué sur la base de la courbure calculée de la face arrière.
